# EUROPEAN PATENT SPECIFICATION

(11) **EP 3 745 505 B1**
(45) Date of publication and mention of the grant of the patent: **29.11.2023**
(21) Application number: 19382436.4
(22) Date of filing: 30.05.2019
(51) Int. Cl.: H01M 4/134, H01M 4/40, H01M 4/58, H01M 4/66, H01M 10/052

(54) **FUNCTIONALIZED LITHIUM ANODE FOR BATTERIES**
FUNKTIONALISIERTE LITHIUMANODE FÜR BATTERIEN
ANODE AU LITHIUM FONCTIONNALISÉE POUR BATTERIES

(43) Date of publication of application: 02.12.2020
(73) Proprietor: Acondicionamiento Tarrasense, 08225 Terrassa Barcelona (ES); GELION TECHNOLOGIES PTY LTD, Eveleigh, NSW 2015 (AU)
(72) Inventor: Valdivielso, Angel Manuel, 08225 Terrassa (Barcelona) (ES); Martins Dos Santos, Luis Miguel, 08225 Terrassa (Barcelona) (ES); Aucher, Christophe, 08225 Terrassa (Barcelona) (ES); Çavus, Gokhan, 08225 Terrassa (Barcelona) (ES); Gutierrez Tauste, David, 08225 Terrassa (Barcelona) (ES); Desilani, Sebastien, 31300 Toulouse (FR); Lawes, Stephen Daniel, Nottawa, Ontario LOM 1PO (CA); Ulissi, Ulderico, MK107HB Milton Keynes (GB)
(74) Representative: Nederlandsch Octrooibureau

(56) References cited:
- WO-A1-2015/088451
- US-A1- 2012 295 149
- US-A1- 2017 101 428
- ANOTHUMAKKOOL BIHAG ET AL: "Interest of molecular functionalization for electrochemical storage", NANO RESEARCH, TSINGHUA UNIVERSITY PRESS, CN, vol. 10, no. 12, 5 September 2017 (2017-09-05), pages 4175-4200, XP036437482, ISSN: 1998-0124, DOI: 10.1007/S12274-017-1797-7 [retrieved on 2017-09-05]

## Description

### Field of the invention

The present invention relates to the field of batteries and in particular to a lithium anode for Li-S, Li-ion, or Li-O₂ batteries.

### Background art

Batteries are devices to store energy, and higher demands are made in respect to their performance. There are different types of batteries, e.g. Ni-Cd, Ni-Zn, Ag-Zn, Li-ion, Li-Os, Lithium-lron-Phosphate, Li-S.

In particular, Li-S batteries have received particular attention because of their fairly low cost, and high theoretical specific capacity (1675 mA.h/g) and theoretical energy density (2500 W.h/kg).

A Li-S battery generally includes a cathode, separator, electrolyte, anode, and current collector.

The cathode usually contains sulfur, a carbon-based material and a binder. The anode is lithium metal and is usually separated from the cathode by a separator and an organic solvent-based electrolyte.

In the review Fotouhi et al., Lithium-Sulfur Battery Technology Readiness and Applications-A Review, Energies, 2017, 10, 1937, it is summarized the working principle of Li-S batteries: during operation (discharge), solid sulfur from the cathode dissolves into the electrolyte, forming S₈(I). Liquid S₈ is then electrochemically reduced at the cathode to form intermediate products, so called lithium polysulfide (PS) species (Li₂Sₓ) with an accompanying oxidation of Li metal to Li⁺ ions at the anode. The polysulfides species (Li₂Sₓ, 2 < x ≤ 8) are soluble in the liquid electrolyte and diffuse out from the cathode to the electrolyte/separator side. When the discharge proceeds, the length of the polysulfide chain is getting reduced, which in turns affects the viscosity, mobility and solubility of Li₂Sₓ compounds. At the end of discharge, S₈ is fully reduced to Li₂S and the anode is fully stripped of Li metal.

In the review on the state-of-the-art of Li-S batteries, Zhang et al., Advances in lithium-sulfur batteries, Mat. Sci. Eng. R, 2017, 121, 1-29, discloses that the problems of lithium metal are known: strong reactivity, formation of dendrites, safety concerns, so that recent attempts have been made to replace Li by another anode, chosen among the anodes already used in Li-ion batteries, for example silicon-based anodes.

Kang et al., A review of recent developments in rechargeable lithium-sulfur batteries, Nanoscale, 2016, 8, 16541-16588, is a review on rechargeable Li-S batteries, which cover developments on anodes. It is disclosed that the anode is a vital constituent of Li-S batteries, and if the anode is unstable, the cycle life of the battery will be negatively affected with fast capacity fading. It is disclosed that some useful methods need to be considered to protect the lithium anode in Li-S batteries: protective layer for anodes (e.g. multilayer graphene, solid electrolyte interphase (SEI)), composites (e.g. ternary composite Si-C-Li), pre-lithiated anodes (e.g. pre-lithiated Si, graphene with Li deposited in the pores), or Li ion-embedded materials as anodes (e.g. carbon, Si-based, Sn-based).

Cheng et al., Toward Safe Lithium Metal Anode in Rechargeable Batteries: A Review, Chem. Rev., 2017, 117, 10403-10473, discloses several approaches to protect Li anodes: artificial formation of a solid electrolyte interphase (electrochemical pretreatment, chemical pretreatment, physical pretreatment), lithiophilic matrix, and conductive matrix.

Luo et al., A dual-functional polymer coating on a lithium anode for suppressing dendrite growth and polysulfide shuttling in Li-S batteries, Chem. Comm., 2017, 53, 963-966, discloses a lithium anode coated with a polymer blend composed of Nation^{®} and polyvinylidene difluoride (PVDF), which exhibited substantially enhanced rate performance and cyclability as well as improved coulombic efficiency for Li-S prototype batteries with a high-S-content cathode.

Manthiram et al., Rechargeable Lithium-Sulfur Batteries, Chem. Rev., 2014, 114, 11751-11787, discloses that the anode is an essential part of the Li-S battery system because its stability determines the long-term cycle life of Li-S batteries. It is further disclosed that the reliability of the lithium metal anode depends significantly on the stability of its passivation layer, which could be improved by changing the electrolyte solvents and introducing additives. Silicon- and carbon-based anodes containing lithium are disclosed as alternatives.

Ma et al., Enhanced cycle performance of a Li-S battery based on a protected lithium anode, J. Mater. Chem. A, 2014, 2, 19355-19359, discloses a conductive polymer layer prepared on the surface of a lithium anode as the protective layer for a Li-S battery. It can not only inhibit the corrosion reaction between the lithium anode and lithium polysulfides effectively, but also suppress the growth of Li dendrites. The polymer is prepared from PEDOT and PEG (poly(3,4-ethylenedioxythiophene)-co-poly(ethylene glycol)). The protective coating was prepared by immersion of the lithium metal into the polymer solution.

International patent application WO-A-2016/083271 discloses a sulfonated fluoropolymer as coating of a lithium electrode for Li-S batteries.

Song et al., Ionomer-Liquid Electrolyte Hybrid Ionic Conductor for High Cycling Stability of Lithium Metal Electrodes, Sci. Rep., 2015, 5, 14458, discloses a highly conductive ionomer/liquid electrolyte hybrid layer tightly laminated on Li metal electrode that can realize stable Li electrodeposition at high current densities up to 10 mA/cm² and permit room-temperature operation of corresponding Li metal batteries with low polarizations. It is disclosed that the hybrid layer is fabricated by laminating few micron-thick Nafion layer on Li metal electrode followed by soaking 1 M LiPF₆ ethylene carbonate/diethyl carbonate (1/1) electrolyte.

Kazyak et al., Improved Cycle Life and Stability of Lithium Metal Anodes through Ultrathin Atomic Layer Deposition Surface Treatments, Chem. Mater., 2015, 27(18), 6457-6452, discloses the treatment of Li metal foil electrodes with ultrathin Al₂O₃ layers to improve cycle life and failure resistance of lithium metal anodes.

Wu et al., A Trimethylsilyl Chloride Modified Li Anode for Enhanced Performance of Li-S Cells, ACS Appl. Mater. Interfaces, 2016, 8, 16386-16395, discloses a method to modify lithium anode for Li-S cells by exposing Li foils to tetrahydrofuran solvent, oxygen atmosphere and trimethylsilyl chloride liquid in sequence. XPS date confirms the formation of Li-O-SiMe₃, rather than Li-SiMe₃ on the surface. It is disclosed that more reversible discharge capacity and higher coulombic efficiency can be achieved.

Fan et al., Advanced chemical strategies for lithium-sulfur batteries: A review, Green Energy Environ., 2018, 3, 2-19, discloses that the performance of Li-S batteries is still far from theoretical prediction because of the inherent insulation of sulfur, shuttling of soluble polysulfides, cathode swelling and the formation of lithium dendrites. The review mainly discusses the recent advances in chemical absorption for improving the performance of Li-S batteries by introducing functional groups (oxygen, nitrogen, and boron, etc.) and chemical additives (metal, polymers, etc.) to the carbon structures, and how these foreign guests immobilize the dissolved polysulfides.

Zhao et al., A review on anode for lithium-sulfur batteries: Progress and Prospects, Chem. Eng. J., 2018, 347, 343-365, discloses a comprehensive review of various strategies for strengthening the anode stability of Li-S battery, including modifying the electrolyte and current collector, employing artificial protection films and finding alternative anodes to replace the lithium anode. Several alternatives for protecting the lithium anode are disclosed: formation of a solid electrolyte interface by using electrolyte additives, artificial SEI films (e.g. by direct coating, magnetron sputtering, chemical coating, chemical graft, chemical vapor deposition), sandwich technology, compound technology (e.g. C-Li, Si-Li, Si-C-Li, Sn-C-Li), use of non-lithium anodes (e.g. C, Si, metal alloy).

Cheng et al., Review-Li Metal Anode in Working Lithium-Sulfur Batteries, J. Electrochem. Soc., 2018, 165(1), A6058 - A6072, discloses that the practical applications of lithium-sulfur batteries are challenged by several obstacles, including the low sulfur utilization and poor lifespan, which are partly attributed to the shuttle of lithium polysulfides and lithium dendrite growth in working lithium-sulfur batteries. It is disclosed that some strategies to protect Li metal anode considering the effect of Li polysulfides have been proposed, such as electrolyte additives, artificial solid electrolyte interphase (SEI), solid-state electrolyte, and structured composite lithium anode. It is further disclosed that surface coating is a facile and cost-effective method to deposit a protective layer onto Li metal anode, which can be conveniently applied in the practical Li-S batteries, wherein the coating materials include Al₂O₃, carbon, some polymers and some alloys.

Thus, in spite of the different proposals available in the state of the art, there is still the need to provide new lithium anodes, which are effective in Li-S batteries.

### Object of the invention

The object of the present invention is a process for preparing a functionalized lithium anode for batteries.

Another aspect of the invention relates to the anode obtainable by said process.

Another aspect of the invention relates to the use of that anode in coin cells.

Another aspect of the invention relates to a coin cell comprising that anode.

Another aspect of the invention relates to the use of that coin cell in an electronic device.

### Description of the drawings

Figure 1

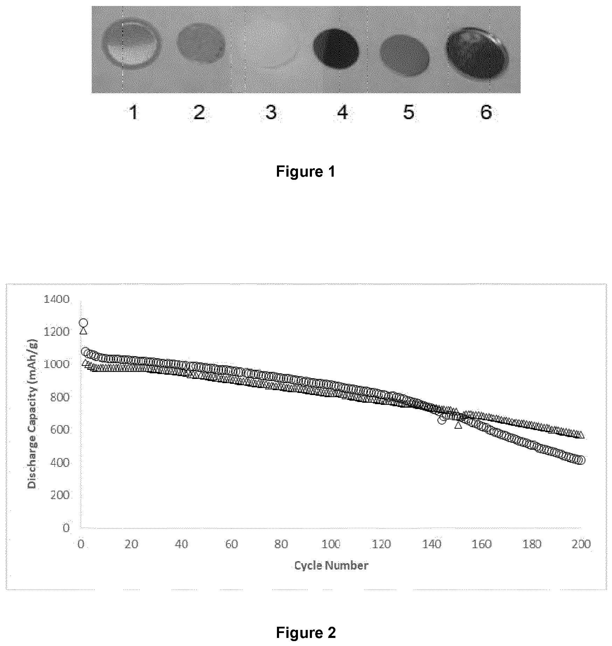

   In Figure 1, it is shown the assembly used for testing the lithium anode functionalized according to the process of the invention in comparison to a non-functionalized lithium anode. The assembly comprises the following elements: stainless steel cap, lithium metal anode, separator, carbon-sulfur cathode, stainless steel pacer and stainless-steel cap.
Figure 2
   In Figure 2 are represented the results of a galvanostatic test carried out in Example 10 with a functionalized lithium anode (Δ) according to Example 1, and with a non-functionalized lithium anode (O). In ordinates it is represented the discharge capacity, expressed in mAh/g, and in abscises the cycle number.
Figure 3

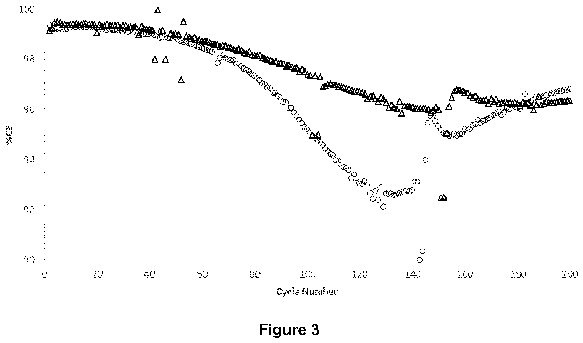

   In Figure 3 are represented the results of a galvanostatic test carried out in Example 10 with a functionalized lithium anode (Δ) according to Example 1, and with a non-functionalized lithium anode (O). In ordinates it is represented the coulombic efficiency (CE), expressed in %, and in abscises the cycle number.

### Detailed description of the invention

The object of the present invention is a process for preparing a functionalized lithium anode for batteries, which comprises contacting a lithium metal substrate with an aromatic diazonium salt in a solvent selected from toluene, tetrahydrofuran, 3,4-dihydro-2H-pyran, 4-ethylmorpholine and 14-dioxane, wherein the functionalization takes place on the surface of the lithium metal substrate.

The inventors of the present invention have developed a process for preparing a functionalized lithium anode by reaction with a diazonium salt, which when incorporated into a coin cell, in particular a Li-S coin cell, provides an improvement of both cycle life and coulombic efficiency. It has surprisingly found that the reduction of a diazonium salt on the surface of lithium metal grants to the lithium anode an enhanced physico-chemical stability that leads to a better battery efficacy and extended lifetime.

There are several advantages that the attachment of organic layers to lithium by reduction of diazonium salts have over other existing techniques/procedures proposed to protect Li anodes, from dendrite growth and other detrimental interaction processes (e.g. polysulfide's diffusion to the anode in Li-S batteries); one of them is undoubtedly the strong character of the (covalent) bond established between the immobilized organic layer and the lithium substrate, which constitutes a convenient mean to immobilize stable covalent films on lithium. It appears to be a method of choice for a strong covalent attachment of polymer chains to the surface forming ultrathin films (thickness can be varied from monolayers to microns). It confers to the organic modified lithium anode a chemical, mechanical and thermal stability, which overcomes those of other coatings casted via other methods. Hence, the result is a more resistant and durable protecting coating, which is able to resist to the often harsh conditions of the battery operation.

The reduction of aryl diazonium salts on lithium anodes constitutes also a versatile method: nearly an endless list of diazonium salts are available, commercially or by *in-situ* generation through the aniline derivative. This allows the grafting of a wide range of organic molecules, allowing simultaneously, tuning the Li surface properties. Adding to this, a large variety of solvents can be used to perform the grafting of these organic layers on lithium (e.g. toluene, tetrahydrofuran, 3,4-dihydro-2H-pyran, 4-ethylmorpholine, 1,4-dioxane), which reinforces the flexibility of this method.

It is also a relatively simple and efficient technique to be performed: it can be achieved simply spontaneously or through electrochemical induction, by application of one potential step, in presence of non-cost reagents. This seriously rivals with more complexes set-ups and expensive techniques used today to perform the derivatization of the lithium surface, in order to reach the same purposes, i.e. to protect Li anodes from polysulfide's diffusion in Li-S batteries and other detrimental interaction processes (e.g. dendrite growth).

Throughout the present description and in the claims, the expressions in singular preceded by the articles "a" or "the" are understood to also include, in a broad manner, the reference to the plural, unless the context clearly indicates the contrary.

In the context of the present invention, it is understood that the term "approximately" referred to a determined value indicates that a certain variation for said value is accepted, generally of +/- 5 %.

The description herein of any aspect or aspect of the invention using terms such as "comprising", "having," "including," or "containing" with reference to an element or elements is intended to provide support for a similar aspect or aspect of the invention that "consists of", "consists essentially of", or "substantially comprises" that particular element or elements, unless otherwise stated or clearly contradicted by context.

The ranges disclosed in this description include both the lower and the upper limit thereof.

### Lithium metal substrate

A lithium metal substrate, suitable for preparing lithium anodes is available in the form of chips, for example, from the company MTI. In a preferred embodiment, the lithium metal substrate is in the form of chips of high purity, usually 99,9%, and of variable shape, thickness and surface, depending of the type and architecture of the cell, wherein the anode is placed, for example, coin cell or pouch cell.

### The diazonium salt

The lithium anode of the present invention is functionalized by means of a reaction with an aromatic diazonium salt in a solvent selected from toluene, tetrahydrofuran, 3,4-dihydro-2H-pyran, 4-ethylmorpholine and 1,4-dioxane.

Generally, the diazonium salt is prepared from the corresponding aniline, or in some cases it is commercially available as such.

In a preferred embodiment, the diazonium salt is prepared from the corresponding aniline in the presence of a nitrosating reagent, for example, alkyl nitrites, such as methyl nitrite, isopropyl nitrite, tert-butyl nitrite, amyl nitrite or isoamyl nitrite, before the reaction with the lithium anode, without any need of isolation and purification

In another preferred embodiment, once synthesized, the diazonium salt may be isolated or it is used as a commercially available diazonium salt. In that embodiment, the diazonium salt is dissolved before the reaction with the lithium anode. In a more preferred embodiment, the diazonium salt is prepared or dissolved in a vessel and subsequently the lithium anode is introduced in that vessel to carry out the functionalization.

Diazonium salts suitable to be used in the process of the present patent application are not limited by the substituents present in the phenyl group, and may be, for example, 4-nitrobenzenediazonium tetrafluoroborate, 4-bromobenzenediazonium tetrafluoroborate, and 3,5-dichlorophenyldiazonium tetrafluoroborate, which are commercially available (Sigma-Aldrich), or 4-propargyloxybenzenediazonium tetrafluoroborate, disclosed in Jin et al., Click Chemistry on Solution-Dispersed Graphene and Monolayer CVD Graphene, Chem. Mat., 2011, 23 (14), 3362-3370. Halogenated diazonium salts may be used to post-functionalize the laminated separator by means of nucleophilic substitutions.

The 4-propargyloxybenzenediazonium tetrafluoroborate is suitable to post-functionalize the lithium anode by means of click chemistry as disclosed in Jin *et al., op. cit*.)

Anilines suitable to be used in the process of the present patent application are, for example, 3,5-bis(trifluoromethyl)aniline, 4-(heptadecafluorooctyl)-aniline, and 4-aminophenethyl alcohol, which are available commercially (Sigma-Aldrich).

The transformation of an aniline into its diazonium salt is a well-known process disclosed in Organic Chemistry, such as, for example, M. B. Smith, J. March, March's Advanced Organic Chemistry (5th ed.), John Wiley & Sons, New York, 2001 (ISBN: 0-471-58589-0). In that reaction, the aniline is treated with nitrous acid, or the combination of sodium nitrite with hydrochloric acid, which yields nitrous acid, or an equivalent compound, such as alkyl nitrites, as disclosed in F. Csende, Alkyl Nitrites as Valuable Reagents in Organic Synthesis, Mini-Rev. Org. Chem., 2015, 12, 127-148, in an appropriate solvent, preferably a deoxygenated solvent.

The anion of the diazonium salt depends on the acid used in the diazotization reaction. Generally, the anion is hydrochloride, hydrobromide, or tetrafluoroborate.

In a preferred embodiment, the aniline is reacted with *tert-*butyl nitrite in a non-aqueous environment, such as a deoxygenated solvent selected from toluene, tetrahydrofuran, 3,4-dihydro-2*H*-pyran, 4-ethylmorpholine and 1,4-dioxane.

In a preferred embodiment, the diazonium salt is selected from a group of diazonium salts comprising: 4-nitrobenzenediazonium tetrafluoroborate, 4-bromobenzenediazonium tetrafluoroborate, 3,5-dichlorophenyldiazonium tetrafluoroborate, and 4-propargyloxybenzenediazonium tetrafluoroborate, and from a group of diazonium salts derived from a group of anilines comprising: 3,5-bis(trifluoromethyl)aniline, 4-(heptadecafluorooctyl)aniline, and 4-aminophenethyl alcohol. In a preferred embodiment, the lithium anode is functionalized using a diazonium salt derived from 3,5-bis(trifluoromethyl)aniline, 4-(heptadecafluorooctyl)aniline, and 4-aminophenethyl alcohol, and more preferably from 3,5-bis(trifluoromethyl)aniline.

### The functionalization reaction

The process to functionalize the lithium anode comprises the reaction of the lithium anode with an aromatic diazonium salt.

The functionalization reaction is carried out electrochemically or chemically.

In a preferred embodiment, the reaction is carried out electrochemically.

In another preferred embodiment, the reaction is carried out chemically.

The reaction is performed usually at room temperature, but it can be carried out at other temperatures, depending on the stability of the diazonium salt. Preferably, the reaction is performed at room temperature.

The electrochemical reaction of the diazonium salt can be carried out either by cyclic voltammetry or by using a potential step approach, in which a higher degree of control over the amount of materials deposited is provided. Very low reduction potentials are required, typically lower that 0 V (vs. Li/Li⁺), to achieve the diazonium electroreduction, preferably the reduction potential is -1 V (vs. Li/Li⁺). The generation of a radical only requires low potentials because of the electron withdrawing power of the diazonium group.

The chemical functionalization of the lithium anode is carried out in a solution of the diazonium salt, either prepared previously *in situ* from the corresponding aniline compound or simply dissolving a diazonium salt, which can be prepared and isolated, or commercially available, in a solvent selected from toluene, tetrahydrofuran, 3,4-dihydro-2*H*-pyran, 4-ethylmorpholine and 1,4-dioxane. Preferably the solvent is selected from toluene, tetrahydrofuran, and 3,4-dihydro-2*H*-pyran. Generally, the reaction is finished after 30 min.

After the reaction, the process for preparing the functionalized lithium anode includes a washing step using the solvent used in the functionalization and additional solvents of different polarity, for example, acetonitrile and toluene, to reduce the adsorption of the diazonium salt on lithium surface.

### The functionalized lithium anode

Another aspect of the invention relates to the functionalized lithium anode obtainable by means of the process of the invention.

The functionalized lithium anode comprises an organic group derived from an aromatic diazonium salt attached to lithium, optionally substituted by functional groups

In a preferred embodiment, the lithium anode comprises a substituted phenyl group attached to the lithium surface, more preferably the phenyl group is derived from diazonium salts selected from the group comprising: 4-nitrobenzenediazonium tetrafluoroborate, 4-bromobenzenediazonium tetrafluoroborate, 3,5-dichlorophenyldiazonium tetrafluoroborate, and 4-propargyloxybenzenediazonium tetrafluoroborate, or from diazonium salts obtained from anilines selected from the group comprising: 3,5-bis(trifluoromethyl)aniline, 4-(heptadecafluorooctyl)aniline, and 4-aminophenethyl alcohol.

Therefore, the phenyl group attached to the surface of the lithium anode is preferably selected from the group comprising: 4-nitrophenyl, 4-bromophenyl, 3,5-dichlorophenyl, 4-propargyloxyphenyl, 3,5-bis(trifluoromethyl)phenyl, 4-(heptadecafluorooctyl)phenyl, 4-phenethyl alcohol, and 3-(methylthio)phenyl. In a preferred embodiment, the substituted phenyl group is selected from 3,5-bis(trifluoromethyl)phenyl group, 4-(heptadecafluorooctyl) group and 4-phenethyl alcohol, and more preferably is 3,5-bis(trifluoromethyl)phenyl group.

X-ray photoelectron spectroscopy (XPS) confirms that functionalization takes place on the surface of the lithium anode. The functionalization is the result of a bonding of covalent character between the lithium surface and the phenyl group resulting from the homolytic dediazonation of the diazonium cation of the diazonium salt. This functionalization is maintained even after ultrasonic washing with different solvents, confirming the strength and the stability of the attachment.

### Coin cells and electronic devices

Another aspect of the invention relates to the use of that functionalized lithium anode in Li-S coin cells, Li-ion cells, and Li-O₂ cells.

The functionalized lithium anode is suitable to be incorporated to Li-S coin cells, Li-ion cells, and Li-O₂ cells. In a preferred embodiment, it is used in Li-S coin cells.

A Li-S coin cell, such as, for example, CR2016-Type coin cell, contains usually the following elements:
1) Stainless steel cap
2) Lithium metal anode
3) Separator
4) Carbon-sulfur cathode
5) Stainless steel spacer
6) Stainless steel cap
as shown in Figure 1.

In addition, the coin cell comprises an electrolyte. In a preferred embodiment the electrolyte consists of a combination of 1,2-dimethoxyethane (DME), 1,3-dioxolane (DOL), bis(trifluoromethylsulfonylamine) lithium salt LiTFSI, and LiNO₃.

Other electrolytes based on solutions of lithium salts such as lithium hexafluorophosphate (LiPF₆), lithium perchlorate (LiClO₄), LiCF₃SO₃ and lithium bis(trifluoromethanesulfonyl)imide (LiTFSI) in nonaqueous solvents such as TEGDME, 1,2-dimethoxyethane (DME), 1,3-dioxolane (DOL), diglyme (DG), ethylene carbonate (EC), dimethyl carbonate (DMC), ethyl methyl carbonate (EMC), propylene carbonate (PC), 2-ethoxyethyl ether (EEE), triglyme, polyethylene glycol) dimethyl ether (PEGDME), and mixtures thereof can also be used. The use of Room temperature Ionic Liquids (RTIL) electrolytes have been also reported e.g. bis(perfluoroethylsulfonyl)imide (EMImTFSI) or 1-butyl-3-methylimidazolium hexafluorophosphate (BMImPF₆), as an additive in liquid electrolytes, such as, for example, 0.5 M LiCF₃SO₃ or 0.5 M LiPF₆ in DME/DOL solvent.

As shown in Example 10 and Figures 2 and 3, the functionalized lithium anode according to the invention shows an improvement of both cycle life and coulombic efficiency in coin cells due to lower electrolyte consumption, wherein the shuttle of polysulfides is retarded, which is the outcome of the enhanced stability of the lithium interface provided by the functionalization by means of a diazonium reduction.

Therefore, the advantages of the functionalized lithium anode of the present patent application over prior art lithium anodes are clear.

Another aspect of the invention relates to a Li-S coin cell, Li-ion cell or Li-O₂ cell comprising that lithium anode, preferably a Li-S coin cell.

Another aspect of the invention relates to the use of that Li-S coin cell, Li-ion cell or Li-O₂ cell in an electronic device, preferably the use of that Li-S coin cell.

Another aspect of the invention relates to an electronic device comprising that Li-S coin cell, Li-ion cell or Li-O₂ cell, preferably a Li-S coin cell.

Common electronic devices containing coin cells are, for example, electric wristwatches, both digital and analogic, backup power for personal computer real time clocks, laser pointers, small LED flashlights, solar/electric candles, LED bicycle head or tail lighting, pocket computers, hearing aids, electronic toys, heart rate monitors, digital thermometers, or digital altimeters.

### Examples

### Example 1: Chemical functionalization of a lithium anode

Inside a Glove Box, lithium chips (approx. 1.5 cm², corresponding to 44 mg) were cleaned in *n*-pentane (3 min) and dried. Afterwards, a solution of 3,5-bis(trifluoromethyl) diazonium salt (10 mM) was prepared by dissolving 3,5-bis(trifluoromethyl)aniline in dry toluene. An excess of *tert*-butyl nitrite relatively to the diazonium salt (30 mM) was added and the solution was stirred during 30 min. Then, lithium chips were introduced into the diazonium solution and stirred during 30 min. Finally, chips were washed with toluene, solvent in which the functionalization was carried out, and acetonitrile, and dried.

X-ray photoelectron spectroscopy confirmed that the functionalization took place on lithium surface by the presence of a strong peak attributed to the F 1s binding energy. This peak was not observed in the spectrum corresponding to the non-functionalized lithium anode.

### Examples 2 - 9: Chemical and electrochemical functionalization of a lithium anode

Functionalized anodes were prepared according to a 2³ factorial design, according to the factors shown in Table I:

**TABLE I**

| Factor | Level - | Level + |
|---|---|---|
| Diazonium precursor | 4-aminophenethyl alcohol | (4-heptadecafluorooctyl)aniline |
| Process | Chemical | Electrochemical |
| Temperature | RT | 50º C |

Experiments were carried according to the layout shown in Table II:

**TABLE II**

| Example | Diazonium precursor | Process | Temperature |
|---|---|---|---|
| 2 | 4-aminophenethyl alcohol | Chemical | RT |
| 3 | (4-heptadecafluorooctyl)aniline | Chemical | RT |
| 4 | 4-aminophenethyl alcohol | Electrochemical | RT |
| 5 | (4-heptadecafluorooctyl)aniline | Electrochemical | RT |
| 6 | 4-aminophenethyl alcohol | Chemical | 50º C |
| 7 | (4-heptadecafluorooctyl)aniline | Chemical | 50º C |
| 8 | 4-aminophenethyl alcohol | Electrochemical | 50º C |
| 9 | (4-heptadecafluorooctyl)aniline | Electrochemical | 50º C |

Reactions with 4-aminophenethyl alcohol (119 mg) as precursor of the diazonium salt were carried out using anhydrous tetrahydrofuran (THF) as solvent.

Reactions with (4-heptadecafluorooctyl)aniline (409 mg) as precursor of the diazonium salt and anhydrous 3,4-dihydro-2*H*-pyran as solvent.

Chemical functionalization was carried out following a substantially analogue procedure disclosed in Example 1.

Lithium chips were cleaned in *n*-pentane (3 min) and dried. Electrochemical functionalization took place by introducing the lithium chips into the diazonium salt solution (previously stirred for 30 min), and by applying a potential of -1 V (vs. Li/Li⁺) during 30 min. Lithium chips were the working electrode, Pt wire was the counter electrode and lithium wire was the reference electrode.

Finally, the Li chips were rinsed either with THF or 3,4-dihydro-2*H*-pyran, depending on the precursor of diazonium salt, and two further solvents of different polarity (toluene and acetonitrile) to reduce the adsorption of the diazonium salt on Li surface.

X-ray photoelectron spectroscopy confirmed that the functionalization took place on lithium surface in all four samples.

In the case of the functionalization with 4-aminophenethyl alcohol (Examples 2, 4, 6 and 8), main differences in comparison to the non-functionalized lithium anode were:
- An excess (at %) C1sll (BE=287ev) attributed to C-O environments.
- An excess (at %) O1sll (BE = 534ev) (shoulder on the high biding energy side of the O1s peak) attributed to the presence of OH groups.
- A ratio C1sll (C-O)/O1sll (OH) ≈ 1 (according to the C/OH ratio on the COH bond) in opposition to 3.8 on the pristine Li.

In the case of the functionalization with (4-heptadecafluorooctyl)aniline) (Examples 3, 5, 7 and 9), main differences in comparison to the non-functionalized lithium anode were:
- An excess (at %) of F1s (687ev) and (690 eV) attributed to the F-C fluorocarbon bonding.
- An excess (at %) of C1s (293 eV) corresponding to C-F.

### Example 10: Galvanostatic test of the Li/S battery containing a functionalized lithium anode

Galvanostatic testing of a functionalized lithium anode, prepared according to the procedure disclosed in Example 1, and non-functionalized lithium anode was carried out in a Li/S battery (CR2016-Type coin cell) containing the following elements:
1) Stainless steel cap (20 mm diameter, 1.6 mm thickness)
2) Lithium metal anode (Lithium 99.9% chip, 15.6 mm diameter, 0.25 mm thickness)
3) Separator (Celgard^{®} 2500)
4) A 2.5 mAh.cm⁻² sulfur/carbon-based cathode, containing 70% sulfur, 15% Ketjen Black carbon and 15% PEO.
5) Stainless steel spacer (2 discs: 16.7 mm diameter, 1 mm and 0.2mm thickness respectively)
6) Stainless steel cap (20 mm diameter, 1.6 mm thickness) as shown in Figure 1.

The separator was soaked in an ether-based electrolyte, that is 1:1 (v/v) dimethoxyethane:dioxolane, 1M LiTFSI, 0.2M LiNO₃.

Cells were cycled between 1.9 - 2.6 V at C/5, without any deep of discharge (DOD)/capacity limitation. 1300 mA/g was used as 1C.

The coulombic efficiency of both lithium anodes was recorded and represented versus the cycle number. The results are shown in Figure 2. It was observed a better coulombic efficiency for the functionalized lithium anode (Δ) in comparison to the non-functionalized lithium anode (O). Actually, it can be seen that the coulombic efficiency remains higher for the cell containing the functionalized lithium anode indicating lower electrolyte consumption

The discharge capacity of both lithium anodes was recorded and represented versus the cycle number. The results are shown in Figure 3. It was observed that the capacity values observed are very similar up to 120 cycles for both cells. After, though a progressive drop is observed for all the cases, it is clear the better performance of the cell containing the functionalized lithium anode (Δ), presenting higher values of discharge capacity as well as a better coulombic efficiency (Figure 2). Thus, a better performance of the functionalized lithium anode (Δ) in comparison to the non-functionalized lithium anode (O) was observed when increasing the number of cycles.

Functionalized lithium anode according to the invention showed an improvement of both cycle life and coulombic efficiency in coin cells due to lower electrolyte consumption, wherein the shuttle of polysulfides is retarded, which is the outcome of the enhanced stability of the lithium interface provided by the functionalization by means of a diazonium reduction.

## Claims

1. A process for preparing a functionalized lithium anode, **characterized in that** it comprises contacting a lithium metal substrate with an aromatic diazonium salt in a solvent selected from toluene, tetrahydrofuran, 3,4-dihydro-2*H*-pyran, 4-ethylmorpholine and 1,4-dioxane, wherein the functionalization takes place on the surface of the lithium metal substrate.

2. The process according to claim 1, **characterized in that** the lithium metal substrate is in the form of chips.

3. The process according to claim 1 or 2, **characterized in that** the diazonium salt is prepared from the corresponding aniline before the reaction with the lithium anode.

4. The process according to any of claims 1 to 3, **characterized in that** the diazonium salt is dissolved before the reaction with the lithium anode.

5. The process according to claim 3 or 4, **characterized in that** the diazonium salt is prepared or dissolved in a vessel and subsequently the lithium anode is introduced **in that** vessel to carry out the functionalization.

6. The process according to any of claims 1 to 5, **characterized in that** the diazonium salt is selected from a group of diazonium salts comprising: 4-nitrobenzenediazonium tetrafluoroborate, 4-bromobenzenediazonium tetrafluoroborate, 3,5-dichlorophenyldiazonium tetrafluoroborate, and 4-propargyloxybenzenediazonium tetrafluoroborate, and from a group of diazonium salts derived from a group of anilines comprising: 3,5-bis(trifluoromethyl)aniline, 4-(heptadecafluorooctyl)aniline, and 4-aminophenethyl alcohol.

7. The process according to any of claims 1 to 6, **characterized in that** functionalization reaction is carried out electrochemically or chemically.

8. A functionalized lithium anode obtainable by means of the process according to any of claims 1 to 7.

9. The functionalized lithium anode according to claim 8, **characterized in that** it comprises an organic group derived from an aromatic diazonium salt attached to lithium, optionally substituted by functional groups, wherein the functionalization takes place on the surface of the lithium metal substrate.

10. The functionalized lithium anode according to claim 9, **characterized in that** it comprises a substituted phenyl group attached to the lithium surface.

11. The functionalized lithium anode according to claim 10, **characterized in that** the phenyl group attached to the surface of the lithium anode is selected from the group comprising of: 4-nitrophenyl, 4-bromophenyl, 3,5-dichlorophenyl, 4-propargyloxyphenyl, 3,5-bis(trifluoromethyl)phenyl, 4-(heptadecafluorooctyl)phenyl, 4-phenethyl alcohol, and 3-(methylthio)phenyl.

12. The use of the functionalized lithium anode according to any of claims 8 to 11 in Li-S coin cells, Li-ion cells, and Li-O₂ cells.

13. A coin cell selected from Li-S coin cell, Li-ion cell or Li-O₂ cell comprising a functionalized lithium anode according to any of claims 8 to 11.

14. The use of the coin cell of claim 13 in an electronic device.

15. An electronic device comprising the coin cell according to claim 13.

## Patentansprüche

1. Verfahren zum Herstellen einer funktionalisierten Lithiumanode, **dadurch gekennzeichnet, dass** es das Inkontaktbringen eines Lithiummetallsubstrats mit einem aromatischen Diazoniumsalz in einem Lösungsmittel umfasst, das aus Toluol, Tetrahydrofuran, 3,4-Dihydro-2H-pyran, 4-Ethylmorpholin und 1,4-Dioxan ausgewählt ist, wobei die Funktionalisierung auf der Oberfläche des Lithiummetallsubstrats erfolgt.

2. Verfahren nach Anspruch 1, **gekennzeichnet dadurch, dass** das Lithiummetallsubstrat in Form von Chips vorliegt.

3. Verfahren nach Anspruch 1 oder 2, **gekennzeichnet dadurch, dass** das Diazoniumsalz vor der Reaktion mit der Lithiumanode aus dem entsprechenden Anilin hergestellt wird.

4. Verfahren nach einem der Ansprüche 1 bis 3, **gekennzeichnet dadurch, dass** das Diazoniumsalz vor der Reaktion mit der Lithiumanode aufgelöst wird.

5. Verfahren nach Anspruch 3 oder 4, **gekennzeichnet dadurch, dass** das Diazoniumsalz in einem Gefäß hergestellt oder aufgelöst wird und anschließend die Lithiumanode in dieses Gefäß eingeführt wird, um die Funktionalisierung auszuführen.

6. Verfahren nach einem der Ansprüche 1 bis 5, **gekennzeichnet dadurch, dass** das Diazoniumsalz aus einer Gruppe von Diazoniumsalzen ausgewählt ist, die Folgendes umfasst: 4-Nitrobenzoldiazoniumtetrafluorborat, 4-Brombenzoldiazoniumtetrafluorborat, 3,5-Dichlorphenyldiazoniumtetrafluorborat und 4-Propargyloxybenzoldiazoniumtetrafluorborat, und aus einer Gruppe von Diazoniumsalzen, die aus einer Gruppe von Anilinen abgeleitet sind, die Folgendes umfasst: 3,5-Bis(trifluormethyl)anilin, 4-(Heptadecafluoroctyl)anilin und 4-Aminophenethylalkohol.

7. Verfahren nach einem der Ansprüche 1 bis 6, **gekennzeichnet dadurch, dass** die Funktionalisierungsreaktion elektrochemisch oder chemisch ausgeführt wird.

8. Funktionalisierte Lithiumanode, die durch das Verfahren nach einem der Ansprüche 1 bis 7 erhältlich ist.

9. Funktionalisierte Lithiumanode nach Anspruch 8, **dadurch gekennzeichnet, dass** sie eine organische Gruppe umfasst, die von einem aromatischen Diazoniumsalz abgeleitet ist, das an Lithium gebunden ist, das optional durch funktionelle Gruppen substituiert ist, wobei die Funktionalisierung auf der Oberfläche des Lithiummetallsubstrats erfolgt.

10. Funktionalisierte Lithiumanode nach Anspruch 9, **dadurch gekennzeichnet, dass** sie eine substituierte Phenylgruppe umfasst, die an die Lithiumoberfläche gebunden ist.

11. Funktionalisierte Lithiumanode nach Anspruch 10, **gekennzeichnet dadurch, dass** die an die Oberfläche der Lithiumanode gebundene Phenylgruppe aus der Gruppe ausgewählt ist, die Folgendes umfasst: 4-Nitrophenyl, 4-Bromphenyl, 3,5-Dichlorphenyl, 4-Propargyloxyphenyl, 3,5-Bis(trifluormethyl)phenyl, 4-(Heptadecafluoroctyl)phenyl, 4-Phenethylalkohol und 3-(Methylthio)phenyl.

12. Verwendung der funktionalisierten Lithiumanode nach einem der Ansprüche 8 bis 11 in Li-S-Knopfzellen, Li-Ionen-Zellen und Li-O₂-Zellen.

13. Knopfzelle, die aus einer Li-S-Knopfzelle, Li-lonen-Zelle oder Li-O₂-Zelle ausgewählt ist, die eine funktionalisierte Lithiumanode nach einem der Ansprüche 8 bis 11 umfasst.

14. Verwendung der Knopfzelle nach Anspruch 13 in einer elektronischen Vorrichtung.

15. Elektronische Vorrichtung, die die Knopfzelle nach Anspruch 13 umfasst.

## Revendications

1. Procédé de préparation d'une anode de lithium fonctionnalisée, **caractérisé en ce qu'**il comprend la mise en contact d'un substrat de lithium métal avec un sel de diazonium aromatique dans un solvant sélectionné parmi toluène, tétrahydrofurane, 3,4-dihydro-2H-pyrane, 4-éthylmorpholine et 1,4-dioxane, où la fonctionnalisation a lieu sur la surface du substrat de lithium métal.

2. Procédé selon la revendication 1, **caractérisé en ce que** le substrat de lithium métal est sous la forme de copeaux.

3. Procédé selon la revendication 1 ou 2, **caractérisé en ce que** le sel de diazonium est préparé à partir de l'aniline correspondante avant la réaction avec l'anode de lithium.

4. Procédé selon l'une quelconque des revendications 1 à 3, **caractérisé en ce que** le sel de diazonium est dissout avant la réaction avec l'anode de lithium.

5. Procédé selon la revendication 3 ou 4, **caractérisé en ce que** le sel de diazonium est préparé ou dissout dans un récipient et ensuite l'anode de lithium est introduite dans ce récipient pour effectuer la fonctionnalisation.

6. Procédé selon l'une quelconque des revendications 1 à 5, **caractérisé en ce que** le sel de diazonium est sélectionné d'un groupe de sels de diazonium comprenant : tétrafluoroborate de 4-nitrobenzènediazonium, tétrafluoroborate de 4-bromobenzènediazonium, tétrafluoroborate de 3,5-dichlorophényldiazonium et tétrafluoroborate de 4-propargyloxybenzènediazonium, et d'un groupe de sels de diazonium dérivés d'un groupe d'anilines comprenant : 3,5-bis(trifluorométhyl)aniline, 4-(heptadécafluorooctyl)aniline et alcool de 4-aminophénéthyle.

7. Procédé selon l'une quelconque des revendications 1 à 6, **caractérisé en ce que** la réaction de fonctionnalisation est effectuée électrochimiquement ou chimiquement.

8. Anode de lithium fonctionnalisée pouvant être obtenue au moyen du procédé selon l'une quelconque des revendications 1 à 7.

9. Anode de lithium fonctionnalisée selon la revendication 8, **caractérisée en ce qu'**elle comprend un groupe organique dérivé d'un sel de diazonium aromatique attaché au lithium, facultativement substitué par des groupes fonctionnels, où la fonctionnalisation a lieu sur la surface du substrat de lithium métal.

10. Anode de lithium fonctionnalisée selon la revendication 9, **caractérisée en ce qu'**elle comprend un groupe phényle substitué attaché à la surface de lithium.

11. Anode de lithium fonctionnalisée selon la revendication 10, **caractérisée en ce que** le groupe phényle attaché à la surface de l'anode de lithium est sélectionné du groupe comprenant : 4-nitrophényle, 4-bromophényle, 3,5-dichlorophényle, 4-propargyloxyphényle, 3,5-bis(trifluorométhyl)phényle, 4-(heptadécafluorooctyl)phényle, alcool de 4-phénéthyle, et 3-(méthylthio)phényle.

12. Utilisation de l'anode de lithium fonctionnalisée selon l'une quelconque des revendications 8 à 11 dans des piles boutons Li-S, des piles Li-ion et des piles Li-O₂.

13. Pile bouton sélectionnée parmi pile bouton Li-S, pile Li-ion ou pile Li-O₂ comprenant une anode de lithium fonctionnalisée selon l'une quelconque des revendications 8 à 11.

14. Utilisation de la pile bouton selon la revendication 13 dans un dispositif électronique.

15. Dispositif électronique comprenant la pile bouton selon la revendication 13.
